(19) Europäisches Patentamt
European Patent Office
Office européen des brevets

(11) **EP 2 876 382 A1**

(12) **DEMANDE DE BREVET EUROPEEN**

(43) Date de publication:
**27.05.2015 Bulletin 2015/22**

(51) Int Cl.:
*F25B 9/00* [(2006.01)]  *F25B 9/12* [(2006.01)]
*F25B 25/00* [(2006.01)]  *F25B 49/02* [(2006.01)]

(21) Numéro de dépôt: **14194653.3**

(22) Date de dépôt: **25.11.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.11.2013 FR 1361636**

(71) Demandeur: **COMMISSARIAT A L'ENERGIE ATOMIQUE ET AUX ENERGIES ALTERNATIVES 75015 Paris (FR)**

(72) Inventeurs:
• **Lagier, Benjamin**
  **69290 Saint Genix les Ollieres (FR)**
• **Hoa, Christine**
  **38000 Grenoble (FR)**
• **Bonnay, Patrick**
  **38000 Grenoble (FR)**

(74) Mandataire: **Novaimo**
  **Bâtiment Europa 2**
  **310 avenue Marie Curie**
  **Archamps Technopole**
  **74166 Saint Julien en Genevois Cedex (FR)**

(54) **Procédé et dispositif de régulation d'un système de refroidissement cryogénique**

(57) Le système de refroidissement comprend un séparateur cryogénique (2), comportant un bain (20) de fluide cryogénique à l'état liquide et relié à un refroidisseur cryogénique (1) par un conduit (4) d'amenée et par un conduit (5) d'évacuation de fluide cryogénique, et un un circuit de refroidissement (3) d'une source thermique, comportant une boucle (30) de circulation d'un fluide caloporteur destinée à recevoir une puissance thermique transmise par la source thermique et pour transférer la puissance thermique transmise au bain cryogénique (20). Selon le procédé de l'invention, les débits fluidiques ($\dot{m}_1, \dot{m}_4$) entrant et sortant du séparateur (2) sont régulés à partir d'une estimation de la puissance thermique transmise par la source, réalisée avant que ladite puissance thermique ne soit transférée au bain cryogénique.

Figure 1

**EP 2 876 382 A1**

**Description**

L'invention concerne un procédé de régulation d'un système de refroidissement cryogénique, un dispositif de régulation associé et un système de refroidissement cryogénique associé.

D'emblée, notons que par le terme « régulation », on entend désigner l'action de maintenir au moins une grandeur physique égale à une valeur souhaitée.

Un tel système de refroidissement est notamment utilisé dans des installations intégrant un réacteur de fusion nucléaire. On peut par exemple citer l'exemple du tokamak, destiné à l'étude de la production d'énergie par fusion nucléaire. Dans un réacteur de fusion nucléaire, un plasma, au sein duquel se déroule la fusion nucléaire, est confiné à l'aide de forts champs magnétiques créés par des aimants supraconducteurs. Pour éviter tout dysfonctionnement des aimants, ceux-ci sont refroidis par un circuit de refroidissement à très basse température, de l'ordre de 4,3 K, à travers lequel circule un fluide caloporteur, par exemple de l'hélium supercritique. Le circuit de refroidissement extrait une charge thermique des aimants, par convection forcée, transporte la charge thermique extraite jusqu'à un bain cryogénique et la cède au bain par l'intermédiaire d'un ou plusieurs échangeurs. Le bain contient un fluide cryogénique, par exemple de l'hélium sous deux phases, une phase vapeur et une phase liquide. Il est relié à un refroidisseur cryogénique par l'intermédiaire d'un conduit d'amenée de fluide cryogénique, à l'état liquide, gazeux ou supercritique, et d'un conduit d'évacuation de fluide cryogénique à l'état de vapeur. Le conduit d'amenée et le conduit d'évacuation sont chacun équipés d'une vanne de régulation du débit entrant ou sortant. Il existe deux configurations possibles :

- une première configuration dite « fermée » dans laquelle le circuit de refroidissement est fermé, dans le sens où il n'y a aucun échange de fluide caloporteur avec l'extérieur,
- une deuxième configuration dite « ouverte » dans laquelle le circuit de refroidissement est ouvert et la pression du fluide caloporteur dans le circuit peut être variable ou régulée par l'intermédiaire de vannes de charge et de vannes de décharge.

Les aimants supraconducteurs d'une installation telle qu'un tokamak subissent des charges thermiques cycliques. Autrement dit, lors d'un cycle de fonctionnement d'une durée T0, les aimants dégagent un pic de puissance thermique pendant une durée $\tau$ telle que $\tau$<T0. Or, le refroidisseur est généralement paramétré pour un point de fonctionnement spécifique et son fonctionnement est stationnaire. Dans ce contexte, pour éviter un éventuel dysfonctionnement du refroidisseur, il convient de « lisser » la charge en pilotant la puissance de refroidissement délivrée par le refroidisseur de manière à ce qu'elle soit la plus proche possible de la puissance thermique moyenne extraite des aimants au cours d'un cycle de fonctionnement, ou plus généralement sur une durée de fonctionnement donnée.

Il existe différentes solutions de « lissage ». Elles visent généralement à réguler les débits d'amenée et d'évacuation (c'est-à-dire les débits entrant et sortant) du bain cryogénique en fonction de la charge thermique totale extraite des aimants au cours d'un cycle de fonctionnement. Cette charge thermique peut être estimée par une évaluation de la variation d'enthalpie aux bornes de l'échangeur du bain ou par une évaluation de la variation de la hauteur du bain comme décrit dans le document FR2963090. Il est donc possible, à l'aide de ces méthodes d'estimation, d'évaluer l'énergie, ou charge, thermique totale extraite par le circuit de refroidissement pendant un cycle de fonctionnement, et d'en déduire la puissance thermique moyenne que le refroidisseur doit délivrer. Les débits d'amenée et d'évacuation peuvent ainsi être paramétrés en fonction de cette puissance thermique moyenne, pour les cycles de fonctionnement suivants.

Avec ce type de solution, la régulation nécessite une première estimation pendant un cycle de fonctionnement initial. En outre, elle ne permet pas une adaptation de la régulation en fonction d'événements imprévus durant un cycle, par exemple un arrêt brutal du plasma, appelé disruption, ou une perte de supraconductivité des aimants, appelée « quench ».

La présente invention vient améliorer la situation.

A cet effet, l'invention concerne un procédé de régulation d'un système de refroidissement cryogénique comportant

- un séparateur cryogénique comportant un bain de fluide cryogénique à l'état liquide et relié à un refroidisseur cryogénique par un conduit d'amenée et par un conduit d'évacuation de fluide cryogénique;
- un circuit de refroidissement d'une source thermique, comportant une boucle de circulation d'un fluide caloporteur destinée à recevoir une puissance thermique transmise par la source thermique et pour transférer la puissance thermique transmise au bain cryogénique ;

dans lequel les débits fluidiques entrant et sortant du séparateur sont régulés à partir d'une estimation de la puissance thermique transmise par la source, réalisée avant que ladite puissance thermique ne soit transférée au bain cryogénique.

Selon l'invention, les débits fluidiques sont régulés sur la base d'une estimation de la puissance thermique réalisée rapidement après que cette puissance ait été transmise dans la boucle, et en toute hypothèse, avant qu'elle ne soit transférée au bain. Grâce à cela, la régulation des débits peut être anticipée et mise en oeuvre avant que les débits fluidiques ne soient impactés par la puissance thermique transmise.

Avantageusement, le procédé comprend une étape de mesure d'au moins une grandeur physique relative au fluide caloporteur circulant dans la boucle, la puissance thermique transmise par la source étant estimée à partir de mesures relatives à ladite grandeur physique.

La régulation est faite à partir de mesures relatives à des grandeurs physiques se rapportant au fluide du circuit de refroidissement, impactées de façon rapide, voire quasi-instantanée, par la puissance thermique transmise.

Dans un premier mode de réalisation, la source thermique ayant un fonctionnement cyclique, il comprend, durant un cycle de fonctionnement d'une durée prédéfinie, une étape de calcul d'au moins une valeur moyenne de puissance thermique transmise sur la durée du cycle de fonctionnement, à partir de valeurs estimées de la puissance thermique transmise à une succession d'instants, mise en oeuvre avant la fin du cycle de fonctionnement, les débits entrant et sortant étant régulés en fonction de ladite valeur moyenne de puissance thermique transmise sur le cycle.

Dans ce cas, et avantageusement, une succession de valeurs moyennes de puissance thermique transmise sont calculées au fur et à mesure du cycle de fonctionnement, les débits entrant et sortant étant régulés de façon dynamique en fonction des valeurs moyennes successives de puissance thermique transmise.

Ainsi, la puissance thermique transmise dans la boucle est moyennée sur la durée totale du cycle avant même la fin du cycle et c'est à partir d'une valeur moyenne de la puissance thermique transmise que les débits fluidiques entrant et sortant du séparateur sont déterminés. Grâce à cela, dans le cas où la source thermique dégage par exemple un pic de puissance d'une durée limitée pendant le cycle de fonctionnement, on peut optimiser la régulation des débits dès sensiblement la fin du pic de puissance.

Dans un mode de réalisation particulier, pour estimer la puissance thermique transmise, on détermine une variation d'énergie interne de la boucle de circulation.

Selon une variante de réalisation particulière, dans le cas d'une configuration fermée de la boucle de circulation, on détermine la variation d'énergie interne dans la boucle à partir de mesures de la pression du fluide caloporteur dans la boucle.

Avantageusement, le circuit de refroidissement comportant au moins un échangeur thermique immergé dans le bain de fluide cryogénique à l'état liquide, l'estimation de la puissance thermique transmise comprend une évaluation de la puissance thermique transférée dans le bain par l'intermédiaire de l'échangeur.

Avantageusement encore, le circuit de refroidissement comportant un circulateur pour faire circuler le fluide caloporteur dans la boucle, l'estimation de la puissance thermique transmise comprend une évaluation de la puissance apportée par le circulateur dans la boucle.

Dans un mode de réalisation particulier, on détermine l'un au moins des paramètres physiques relatifs au fluide caloporteur dans la boucle du groupe comportant une énergie interne, une enthalpie et une densité massique par interpolation linéaire à partir de mesures d'au moins une grandeur physique relative au fluide caloporteur et à l'aide de données thermodynamiques relatives au fluide caloporteur. Grâce à cela, il n'est pas nécessaire d'utiliser des ressources de calcul importantes.

Avantageusement, l'étape de mesure comprend des mesures de températures, de pressions et de débits massiques.

Avantageusement encore, lors de l'étape de mesure, on mesure au moins l'une des grandeurs physiques du groupe comportant

- les températures en entrée et en sortie d'au moins un échangeur thermique immergé dans le bain de fluide cryogénique du séparateur ;
- les températures en entrée et en sortie d'un circulateur de la boucle de circulation ;
- les pressions en entrée et en sortie d'un circulateur de la boucle de circulation ;
- le débit massique de fluide caloporteur en une position le long de la boucle de circulation ;
- le débit massique entrant, la température et la pression du fluide caloporteur délivré par une vanne de charge dans la boucle ;
- le débit massique sortant, la température et la pression du fluide caloporteur retiré de la boucle par une vanne de décharge.

L'invention concerne aussi un dispositif de régulation pour un système de refroidissement cryogénique d'une source thermique, ledit système comportant

- un séparateur cryogénique comportant un bain de fluide cryogénique à l'état liquide et relié à un refroidisseur cryogénique par un conduit d'amenée de fluide cryogénique au moins partiellement à l'état liquide et par un conduit d'évacuation de fluide cryogénique à l'état de vapeur;

- un circuit de refroidissement de la source thermique, comportant une boucle de circulation d'un fluide caloporteur destinée à recevoir la puissance thermique transmise par la source thermique et pour transférer la puissance thermique transmise au bain cryogénique;

caractérisé en ce qu'il comprend des éléments matériels et logiciels pour mettre en oeuvre les étapes du procédé.

Avantageusement, le dispositif comprend un module d'estimation de la puissance thermique transmise et un module de régulation des débits entrant et sortant de fluide cryogénique dans le bain à partir de la puissance thermique transmise estimée, ledit module d'estimation étant adapté pour réaliser une estimation de la puissance thermique transmise avant que ladite puissance thermique ne soit transférée au bain cryogénique.

Avantageusement encore, le dispositif comprend une mémoire de stockage de données thermodynamiques relatives au fluide caloporteur.

L'invention concerne enfin un système de refroidissement cryogénique d'une source thermique comportant

- un séparateur cryogénique comportant un bain de fluide cryogénique à l'état liquide et relié à un refroidisseur cryogénique par un conduit d'amenée de fluide cryogénique au moins partiellement à l'état liquide et par un conduit d'évacuation de fluide cryogénique à l'état de vapeur;
- un circuit de refroidissement de la source thermique, comportant une boucle de circulation d'un fluide caloporteur destinée à recevoir la puissance thermique transmise par la source thermique et pour transférer la puissance thermique transmise au bain cryogénique ;
- un dispositif de régulation tel que précédemment défini.

L'invention sera mieux comprise à l'aide de la description suivante d'un mode de réalisation particulier du procédé et du dispositif de régulation d'un système de refroidissement cryogénique d'une source thermique selon l'invention, en référence aux dessins annexés sur lesquels :

- La figure 1 représente un schéma du système de refroidissement, selon un exemple de réalisation particulier ;
- La figure 2 représente des capteurs de mesure de grandeurs physiques disposés sur un circuit de refroidissement du système de la figure 1 ;
- La figure 3 représente une table relative à la densité massique d'un fluide caloporteur du circuit de refroidissement ;
- La figure 4 représente l'évolution de la pression fluidique dans une boucle du circuit de refroidissement du système de la figure 1 et l'évolution de la puissance thermique transmise par la source, durant une partie d'un cycle de fonctionnement ;
- La figure 5 représente l'évolution du débit fluidique de sortie d'un séparateur du système de refroidissement de la figure 1 durant un cycle de fonctionnement, selon trois modes de régulation ;
- La figure 6 représente un schéma simplifié d'un séparateur relié à un refroidisseur du système de la figure 1 ;
- La figure 7 représente l'évolution de la puissance de réfrigération selon un premier mode de régulation dans lequel la régulation est réalisée par une estimation de charge selon l'invention lors d'un premier cycle, puis par des corrections lors des cycles suivants ;
- La figure 8 représente l'évolution de la puissance de réfrigération selon un mode de réfrigération dans lequel la régulation est réalisée par une estimation de charge selon l'invention à chaque cycle ;
- La figure 9 représente un exemple de chronologie des évènements (dépôt de puissance thermique par la source, transfert de puissance vers le bain, calcul de puissance thermique transmise, régulation du débit sortant du séparateur) lors d'un cycle ;

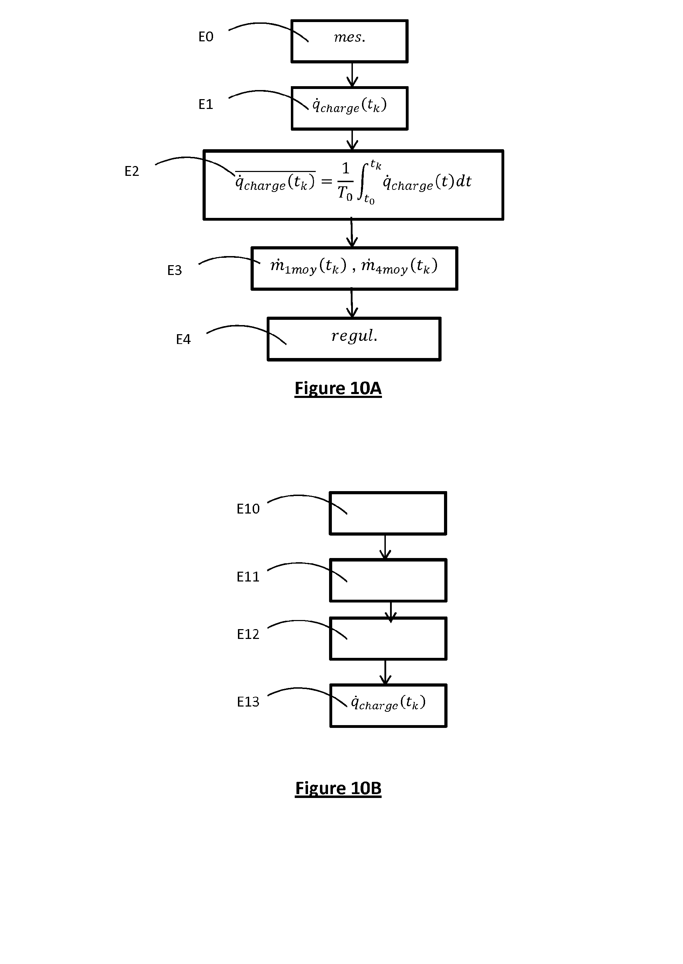

- Les figures 10A et 10B représentent des organigrammes d'étapes du procédé de régulation ;
- La figure 11 représente un schéma d'un automate du système de refroidissement.

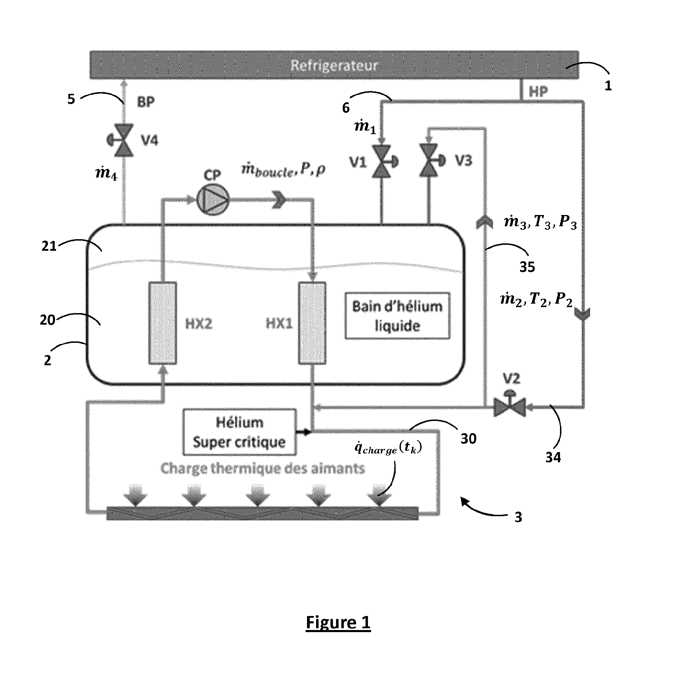

Sur la figure 1, on a représenté un schéma général d'un système de refroidissement cryogénique. Un tel système peut par exemple être utilisé pour le refroidissement d'aimants supraconducteurs au sein d'un tokamak.

Dans le tokamak, les aimants supraconducteurs créent de forts champs magnétiques pour confiner le plasma au sein duquel se déroule la réaction nucléaire. Ils subissent des charges thermiques de façon pulsée et cyclique. En d'autres termes, les aimants dégagent des pics ou impulsions de puissance thermique qui se répètent de façon cyclique, au cours de cycles de fonctionnement successifs.

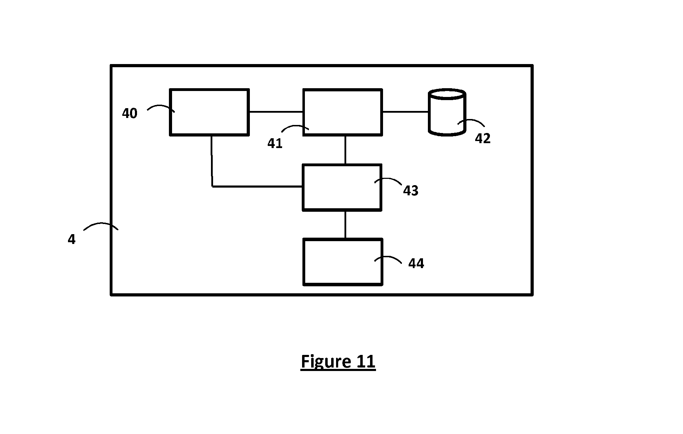

En référence à la figure 1, le système comprend un refroidisseur de fluide cryogénique 1, ou réfrigérateur, un séparateur de phase 2, un circuit fluidique 3 de refroidissement d'une source thermique constituée ici par les aimants supraconducteurs (non représentés), et un automate 4 de commande du système (figure 11). Le fluide cryogénique est, dans l'exemple particulier décrit ici, l'hélium. On pourrait bien entendu utiliser un autre fluide adapté.

Le séparateur de phase 2 comporte un bain de fluide cryogénique 20 (ici de l'hélium) à l'état liquide, à la pression de 1,1 bar et à la température de 4,3K, ce qui correspond à une condition de saturation et donc d'équilibre entre les phases liquide 20 et vapeur 21 de l'hélium.

Le refroidisseur d'hélium 1 et le séparateur de phase 2 sont reliés l'un à l'autre par l'intermédiaire d'un conduit d'amenée 6 et d'un conduit d'évacuation 5, sur lesquels deux vannes respectives V1 et V4 sont disposées. La vanne d'amenée V1 régule le débit massique entrant, ou d'amenée, noté $\dot{m}_1$, de fluide cryogénique à l'état liquide ou à l'état supercritique. Le fluide cryogénique circulant dans le conduit d'amenée est à haute pression, ici 16 bar, et à la température de 4,5K. La vanne d'évacuation V4 régule par limitation le débit massique sortant, ou d'évacuation, noté $\dot{m}_4$, de fluide cryogénique à l'état de vapeur. Le fluide cryogénique circulant dans le conduit d'évacuation 5 est à basse pression, ici 1,1 bar, et à la température de 4,3K. Il est à noter que toutes les vannes peuvent être remplacées par tout autre élément de contrôle de débit (par exemple une détendeur à piston ou un compresseur froid.

Le circuit fluidique de refroidissement 3 est destiné à refroidir les aimants supraconducteurs par convection forcée. Un fluide caloporteur circule en boucle dans le circuit 3 sous l'action d'un circulateur CP. Il reçoit de la chaleur, c'est-à-dire de la puissance thermique, transmise, ou déposée, par la source thermique (aimants supraconducteurs), et cède la puissance thermique transmise au bain 20. Le circuit de refroidissement 3 comprend un ou plusieurs échangeur(s) thermique(s) immergé(s) dans le bain 20. Dans l'exemple particulier décrit ici, il est prévu deux échangeurs thermiques HX1, HX2 immergés dans le bain 20 et reliés en série par l'intermédiaire de conduits de manière à former une boucle 30 de circulation du fluide caloporteur.

De façon générale, la boucle de circulation 30 est reliée à une sortie haute pression du refroidisseur 1, par un conduit de charge 34, et au séparateur de phase 2, par un conduit de décharge 35. La décharge pourrait être faite ailleurs que dans le bain. Les conduits 34 (charge) et 35 (décharge) sont dotés de vannes respectives V2, V3, dites de charge et de décharge, qui permettent de réguler la pression dans le circuit de refroidissement 3 par apport ou retrait de fluide caloporteur. Dans le cas d'une configuration dite « fermée », dans laquelle la boucle 30 de circulation du fluide caloporteur est fermée, les vannes V2 et V3 sont fermées sur le schéma de la figure 1, ou bien les conduits 34 et 35 sont supprimés.

On remarquera que cette forme de réalisation n'est qu'un exemple et que les vannes peuvent être placées à d'autres endroits de la boucle.

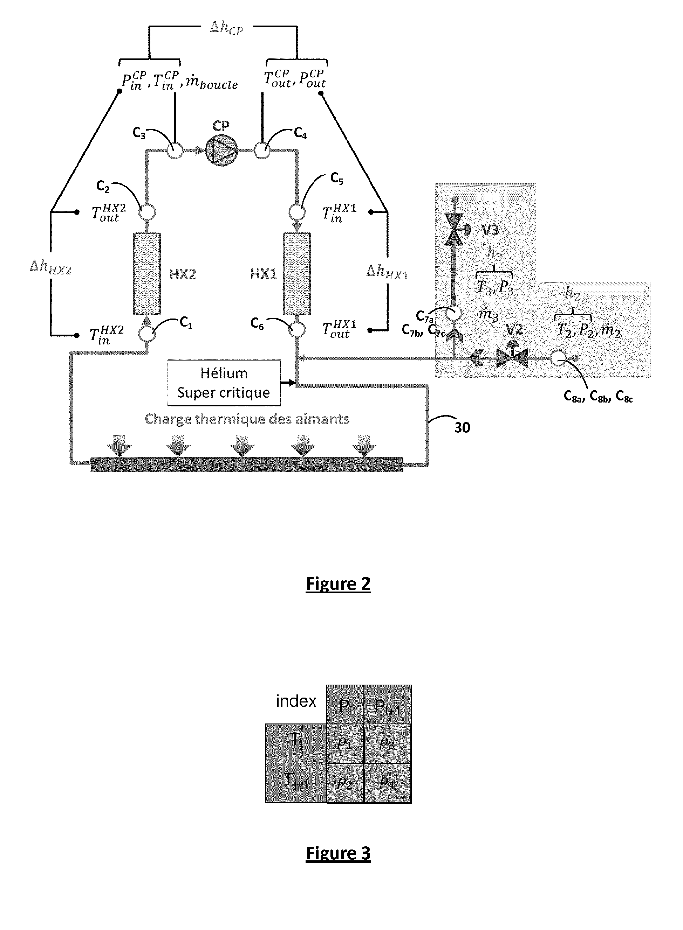

En référence à la figure 2, des capteurs sont disposés le long du circuit de refroidissement 3 pour mesurer différentes grandeurs physiques relatives au fluide caloporteur :

- capteur C1 de mesure de la température du fluide caloporteur $T_{in}^{HX2}$ en entrée de l'échangeur HX2,

- capteur C2 de mesure de la température du fluide caloporteur $T_{out}^{HX2}$ en sortie de l'échangeur HX2,

- capteurs C3a, C3b et C3c (représentés par un seul capteur C3 sur la figure 2 par souci de clarté) de mesure des trois grandeurs physiques suivantes :

  o pression du fluide caloporteur $p_{in}^{CP}$ en entrée du circulateur CP (C3a),

  o température du fluide caloporteur $T_{in}^{CP}$ en entrée du circulateur CP (C3b),

  o débit massique du fluide caloporteur $\dot{m}_{boucle}$ dans la boucle de circulation (C3c),

- capteurs C4a et C4b (représentés par un seul capteur C4 sur la figure 2 par souci de clarté) de mesure des deux grandeurs physiques suivantes :

  o pression du fluide caloporteur $p_{out}^{CP}$ en sortie du circulateur CP (C4a),

  o température du fluide caloporteur $T_{out}^{CP}$ en sortie du circulateur CP (C4b),

- capteur C5 de mesure de la température du fluide caloporteur $T_{in}^{HX1}$ en entrée de l'échangeur HX1,

- capteur C6 de mesure de la température du fluide caloporteur $T_{out}^{HX1}$ en sortie de l'échangeur HX1 ;

- capteurs C7a, C7b, C7c de mesure des trois grandeurs physiques suivantes :

  o débit massique du fluide caloporteur $\dot{m}_3$ en entrée de la vanne V3 (C7a),

  o pression du fluide caloporteur $p_{in}^{V3}$ en entrée de la vanne V3 (C7b),

  o température du fluide caloporteur $T_{in}^{V3}$ en entrée de la vanne V3 (C7c) ;

- capteurs C8a, C8b, C8c (représentés par un seul capteur C8 sur la figure 2 par souci de clarté) de mesure des trois grandeurs physiques suivantes :

  o débit massique du fluide caloporteur $\dot{m}_2$ en entrée de la vanne V2 (C8a),

  o pression du fluide caloporteur $p_{in}^{V2}$ en entrée de la vanne V2 (C8b),

  o température du fluide caloporteur $T_{in}^{V2}$ en entrée de la vanne V2 (C8c).

Les termes « entrée » et « sortie » font référence au sens de circulation du fluide dans le circuit de refroidissement 3.

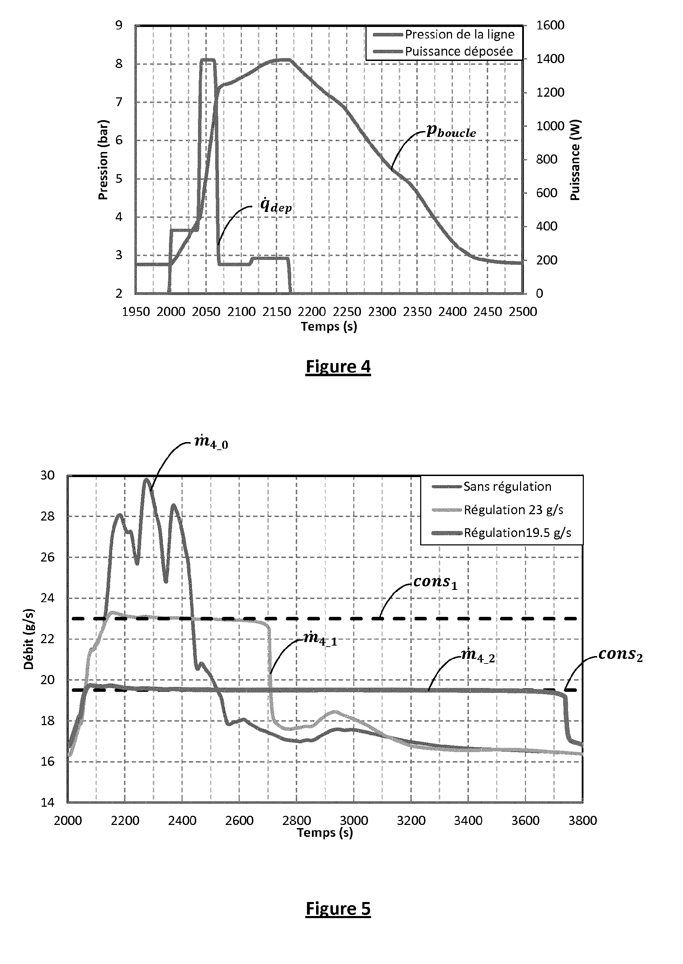

Comme précédemment indiqué, la source thermique (ici aimants supraconducteurs) a un fonctionnement cyclique et pulsé. Lors de chaque cycle de fonctionnement d'une durée prédéfinie T0, les aimants supraconducteurs dégagent un pic de puissance thermique durant une durée τ inférieure à T0. A titre d'exemple illustratif, les durées T0 et τ sont ici égales à 1800s (soit 30 minutes) et à 170s, respectivement. Le pic de puissance thermique se produit par exemple en début de chaque cycle. Il en résulte que la puissance thermique dégagée par la source thermique et transmise à la boucle 30 (c'est-à-dire extraite de la source par le circuit de refroidissement 3) a la forme d'une impulsion d'une durée sensiblement égale à τ, comme représenté à titre d'exemple illustratif par la courbe $\dot{q}_{dep}$ sur la figure 4. Sur cette figure 4, on a également représenté l'évolution de la pression $p_{boucle}$ dans la boucle de circulation 30 durant le cycle de fonctionnement. On observe que la variation de pression $p_{boucle}$ est fortement corrélée à l'amplitude de la puissance thermique transmise.

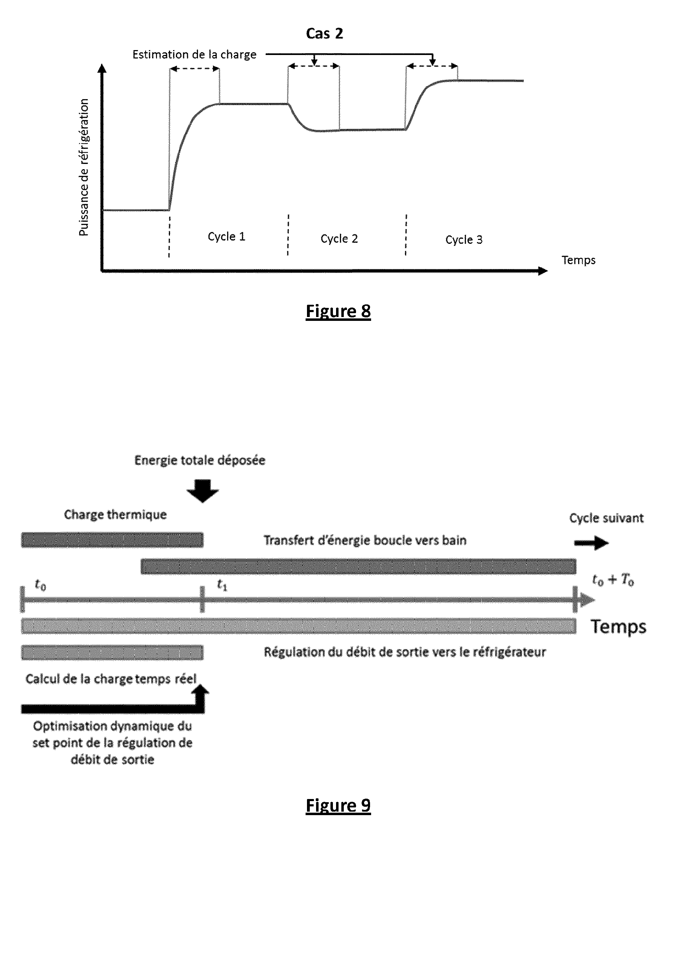

Dans l'exemple particulier décrit ici, la fin du pic de puissance coïncide sensiblement avec l'arrivée de fluide caloporteur chaud au niveau de l'échangeur HX2. Dans l'exemple particulier représenté sur la figure 9, on voit que le transfert de l'énergie thermique extraite de la source dans le bain commence peu avant la fin de la période d'extraction de cette énergie. Autrement dit, la durée de transport du fluide caloporteur entre la sortie de la source thermique et l'entrée de l'échangeur HX2 est ici sensiblement égale à la durée τ du pic de puissance thermique.

La charge thermique (c'est-à-dire la puissance thermique) extraite des aimants supraconducteurs a des conséquences physiques différentes selon la configuration, ouverte ou fermée, du circuit de refroidissement.

Dans le cas d'une configuration en boucle fermée, la pression du fluide caloporteur dans le circuit 3 varie en particulier en fonction de la charge thermique extraite de la source thermique. Cette variation de pression est quasi-instantanée sur toute la longueur de la boucle 30 de circulation du circuit 3, dans la mesure où celle-ci est du même ordre de grandeur que la distance parcourue par le son dans l'hélium en 1 seconde (230m) ou inférieure à cette distance. En effet, le temps d'équilibre de la pression, qui est lié à la vitesse du son dans l'hélium, est court (de l'ordre d'une seconde pour un circuit dont la longueur est du même ordre de grandeur que la distance parcourue par le son dans l'hélium en 1 seconde). Un capteur de pression destiné à mesurer l'impact de la puissance thermique transmise par la source au circuit de refroidissement peut donc être installé n'importe où le long de la boucle de circulation, par exemple à l'entrée du circulateur CP. Dans le cas d'un circuit plus long, il est préférable de placer le capteur de pression le plus près possible de la zone de dépôt de la puissance thermique de la source.

La puissance thermique transmise par la source (aimants supraconducteurs) au circuit de refroidissement 3 peut être évaluée en temps réel à partir de mesures d'au moins une grandeur physique relative au fluide caloporteur circulant dans le circuit de refroidissement. Dans l'exemple particulier décrit ici, les grandeurs physiques mesurées comprennent des pressions, des températures et des débits massiques, mesurés par les capteurs C1 à C8 comme cela sera explicité plus loin.

L'automate de commande 4, représenté sur la figure 11, comprend :

- un module 40, ici logiciel, de prélèvement de mesures des capteurs C1 à C8 ;
- un module 41, ici logiciel, d'estimation d'une valeur moyenne de la puissance thermique extraite de la source thermique par le circuit de refroidissement durant un cycle de fonctionnement ;
- une mémoire 42 de stockage de données thermodynamiques relatives au fluide caloporteur comportant des tables relatives à des paramètres physiques du fluide caloporteur (par exemple l'énergie interne u, l'enthalpie h et la densité p), contenant pour un ensemble de valeurs prédéfinies d'une ou plusieurs grandeurs physiques données, des valeurs d'un paramètre physique du fluide (par exemple la densité p en fonction de la pression p et de la température T) ;
- un module 43, ici logiciel, de commande des vannes V1 à V4 ;
- une unité centrale de commande 44, en l'espèce un microprocesseur, à laquelle les éléments 40-43 de l'automate sont reliés, destinée à contrôler le fonctionnement de ces éléments et à exécuter les modules logiciels.

Le module d'estimation 41 comprend un programme d'ordinateur comportant des instructions logicielles pour commander l'exécution de celles des étapes du procédé de régulation qui va maintenant être décrit, qui sont mises en oeuvre par le module d'estimation 41, lorsque ce programme est exécuté par l'unité centrale de commande 44.

On va maintenant décrire un mode de réalisation particulier du procédé de régulation du système de refroidissement selon l'invention. Ce procédé est mise en oeuvre sous le contrôle de l'automate 4, qui constitue un dispositif de régulation du système de refroidissement.

Le terme « régulation » est utilisé dans son sens technique selon lequel il désigne l'action de maintenir au moins une grandeur physique égale à une valeur souhaitée, par exemples les débits entrant et sortant de fluide cryogénique.

Les étapes de régulation décrites ci-après sont mises en oeuvre lors d'un cycle de fonctionnement de durée T0, entre les instants $t_0$ et $t_0+T0$.

Le procédé comprend une étape de mesure E0, lors de laquelle, sur commande de l'automate 4, à un instant de mesure $t_k$, les capteurs C1 à C8 mesurent les grandeurs physiques suivantes relatives au fluide caloporteur de la boucle de circulation 30 : $T_{in}^{HX2}$, $T_{out}^{HX2}$, $p_{in}^{CP}$, $T_{in}^{CP}$, $\dot{m}_{boucle}$, $p_{out}^{CP}$, $T_{out}^{CP}$, $T_{in}^{HX1}$, $T_{out}^{HX1}$, $\dot{m}_3$, $p_{in}^{V3}$, $T_{in}^{V3}$,

$\dot{m}_2$, $p_{in}^{V2}$, $T_{in}^{V2}$

L'étape de mesure E0 est suivie d'une étape E1 de calcul d'une estimation de la puissance thermique $\dot{q}_{charge}(t_k)$ extraite des aimants par le circuit de refroidissement à l'instant de mesure $t_k$, lors du cycle de fonctionnement. Lors de cette étape E1, l'automate 4 calcule à l'instant de mesure $t_k$ la puissance $\dot{q}_{charge}(t_k)$ extraite de la source thermique par le circuit de refroidissement 3. Les étapes E0 et E1 sont réitérées à une succession d'instants de mesure $t_k$, $t_{k+1}$, ..., pendant toute la durée du cycle de fonctionnement.

L'équation bilan (1) de la variation de l'énergie interne massique de la boucle de circulation 30 est la suivante :

$$\rho V \frac{du}{dt} + \frac{d\rho}{dt} V u = \dot{q}_{tot} + \dot{m}_2 h_2 - \dot{m}_3 h_3 - \dot{m}_{boucle}(\Delta h_{HX1} + \Delta h_{HX2}) \qquad (1)$$

avec :

$$\frac{du}{dt} = \frac{u(p_{tk+1}, \rho_{tk+1}) - u(p_{tk}, \rho_{tk})}{dt} \qquad (2)$$

$$V.\frac{d\rho}{dt} = \dot{m}_2 - \dot{m}_3 \qquad (3)$$

$$\dot{q}_{tot} = \dot{q}_{pertes} + \dot{m}_{boucle}\Delta h_{CP} + \dot{q}_{charge} \qquad (4)$$

$$\Delta h = h_{entrée} - h_{sortie} \qquad (5)$$

où :

- $\rho$, en kg.m⁻³, représente la densité massique moyenne du fluide caloporteur dans la boucle;
- $V$, en m³, est un paramètre fixe qui représente le volume interne de la boucle de circulation du circuit de refroidissement (c'est-à-dire des conduits dans lesquels le fluide circule ou peut circuler) ;
- $u$, en J.kg⁻¹, représente l'énergie interne massique du fluide caloporteur dans la boucle ;
- p, en Pa, représente la pression du fluide caloporteur dans la boucle ;
- $h_2$, en J.kg⁻¹, représente l'enthalpie interne massique du fluide caloporteur apporté par la vanne de charge V2 dans la boucle ;
- $\dot{m}_2$, en kg.s⁻¹, représente le débit massique du fluide caloporteur apporté par la vanne de charge V2 dans la boucle ;

- $h_3$, en J.kg$^{-1}$, représente l'enthalpie interne massique du fluide caloporteur retiré de la boucle par la vanne de décharge V3 ;
- $\dot{m}_3$, en kg.s$^{-1}$, représente le débit massique du fluide caloporteur retiré de la boucle par la vanne de décharge V3 ;
- $\dot{q}_{tot}$, en W, représente la puissance totale transmise à la boucle ;
- $\dot{m}_{boucle}$, en kg.s$^{-1}$, représente le débit massique du fluide caloporteur dans la boucle ;
- $\Delta h_{HX1}$, en J.kg$^{-1}$, représente la variation d'enthalpie interne massique du fluide caloporteur aux bornes de l'échangeur thermique HX1 (entre l'entrée et la sortie de l'échangeur) ;
- $\Delta h_{HX2}$, en J.kg$^{-1}$, représente la variation instantanée d'enthalpie interne massique du fluide caloporteur aux bornes de l'échangeur thermique HX2 (entre l'entrée et la sortie de l'échangeur);
- $\dot{q}_{pertes}$, en W, représente la puissance des pertes thermiques le long de la boucle ;
- $\dot{m}_{boucle}\Delta h_{CP}$, en W, représente la puissance fournie par le circulateur CP ($\Delta h_{CP}$ représentant la variation d'enthalpie entre l'entrée et la sortie du circulateur CP) ;
- $\dot{q}_{charge}$, en W, représente la puissance de la charge thermique extraite de la source (aimants supraconducteurs) par la boucle.

L'équation (1) traduit le fait que la variation instantanée d'énergie interne de la boucle de circulation 30 du circuit 3 dépend de la puissance transmise à la boucle 30 (c'est-à-dire reçue par la boucle), des flux d'enthalpie entrant et sortant liés aux éventuelles opérations de charge et de décharge de fluide caloporteur dans la boucle dans le cas d'une configuration ouverte (ces flux d'enthalpie étant nuls dans le cas d'une configuration fermée), et de la puissance dissipée par les échangeurs thermiques HX1 et HX2. La puissance transmise, notée $\dot{q}_{tot}$, comprend les pertes thermiques le long de la boucle de circulation, la puissance fournie par le circulateur CP et la puissance thermique extraite de la source thermique, comme cela est traduit par l'équation (4). Notons que, dans le cas particulier d'une configuration fermée, on a d'importantes simplifications car :

$$\frac{d\rho}{dt} = 0 \text{ et } \dot{m}_2 = \dot{m}_3 = 0$$

Afin de s'affranchir au moins partiellement des erreurs statiques des capteurs et de minimiser les erreurs de calcul, on peut réaliser la différence entre le bilan à l'instant $t_k$ et le bilan à l'équilibre à l'instant initial $t_0$ du cycle de fonctionnement. Le bilan « à l'équilibre » s'entend ici du bilan à l'état stationnaire, dans lequel il n'y a plus de variations de grandeurs physiques dans la boucle 30.

Il résulte de l'équation bilan (1) que la puissance thermique extraite de la source thermique (aimants) à un instant $t_k$ peut être déterminée par l'équation suivante :

$$\dot{q}_{charge} = \rho V \frac{du}{dt} + \frac{d\rho}{dt} V u - \Delta_1 2 + \Delta_1 3 + \Delta_2 HX1 + \Delta_2 HX2 - \Delta_2 CP \qquad (6)$$

avec les notations:

$$\Delta_1 X = \dot{m}_X h_X(t_k) - \dot{m}_X h_X(t_0) \qquad (7)$$

$$\Delta_2 Y = \dot{m}_{boucle} \Delta h_Y(t_k) - \dot{m}_{boucle} \Delta h_Y(t_0) \qquad (8)$$

où :

- $\Delta_1 2$ représente le flux d'enthalpie entrant à travers la vanne V2 ;
- $\Delta_1 3$ représente le flux d'enthalpie sortant à travers la vanne V3 ;
- $\Delta_2 HX1$ représente la variation d'enthalpie aux bornes de l'échangeur HX1 ;
- $\Delta_2 HX2$ représente la variation d'enthalpie aux bornes de l'échangeur HX2.

Les grandeurs physiques de température T, de pression p et de débit massique p du fluide caloporteur sont mesurées par les capteurs C1 à C8. Les capteurs de température C1-C2 et C5-C6 doivent être positionnés au plus proche des bornes des échangeurs HX1 et HX2 afin de minimiser le volume de fluide entre chaque capteur et la borne d'échangeur correspondante et limiter ainsi les erreurs dans les calculs d'enthalpie et d'énergie.

Pour calculer le résultat de l'équation (6), autrement dit la puissance thermique $\dot{q}_{charge}(t_k)$ transmise par la source à la boucle à l'instant $t_k$, il convient de déterminer ou d'évaluer des paramètres physiques et/ou variations de paramètres physiques, relatifs au fluide caloporteur, tels que des paramètres d'énergie interne $u$ de la boucle 30, d'enthalpie $h$ et de densité massique $\rho$, à chaque instant de mesure $t_k$.

Ces paramètres physiques sont déterminés à partir de mesures de grandeurs physiques réalisées par les capteurs. Les paramètres d'enthalpie et de densité massique peuvent ainsi être déterminés à partir de mesures de pression et de température. Le paramètre de densité massique correspond à une densité massique moyenne dans la boucle. Dans le cas particulier d'une configuration en boucle fermée, elle peut être calculée en divisant la masse totale de fluide caloporteur de la boucle par le volume interne de la boucle, ou être déterminée par calibration. L'énergie interne peut être déterminée à partir de mesures de pression et de valeurs déterminées de densité massique. La variation instantanée d'énergie interne $du/dt$ est déterminée à l'aide de l'équation (2) entre deux instants de mesure successifs. La variation instantanée de densité massique $dp/dt$ est déterminée à l'aide de l'équation (3) à partir de valeurs mesurées de débit massique à travers les vannes V2 et V3.

Dans l'exemple particulier décrit ici, les paramètres d'énergie interne $u$, d'enthalpie $h$ et de densité massique p, ou de variations de ces paramètres, sont déterminés par interpolation linéaire à partir de différentes tables de données thermodynamiques relatives au fluide caloporteur (hélium), se rapportant aux différents paramètres physiques à déterminer. La table se rapportant à un paramètre physique donné (ici $u$, $h$, $\rho$) contient un ensemble de valeurs prédéterminées de ce paramètre physique associées à des valeurs prédéfinies de grandeurs physiques du fluide caloporteur (par exemple sa pression $p$, sa température T et/ou sa densité p) dont le paramètre physique découle. Pour chacun des paramètres physiques à déterminer ($u,h$, $\rho$), l'automate mémorise un ensemble de valeurs prédéterminées de ce paramètre physique associées chacune à des valeurs prédéfinies des données physiques dont ce paramètre physique découle. En variante, les paramètres d'énergie interne $u$, d'enthalpie $h$ et de densité massique $\rho$, ou de variations de ces paramètres, pourraient être déterminés par des calculs utilisant des fonctions d'état connues, à partir des grandeurs physiques mesurées par les capteurs et/ou déterminés.

Prenons l'exemple de la densité massique $\rho$ du fluide caloporteur qui découle de sa pression $p$ et de sa température $T$. Sur la figure 3, on a représenté un extrait illustratif d'une table à deux dimensions (2D) contenant des valeurs de densité $\rho$ pré-calculées, notées $\rho_1$, $\rho_2$, $\rho_3$, $\rho_4$, en fonction de différentes valeurs des variables d'état de pression et de température, notées $p_i$, $p_{i+1}$, $T_j$, $T_{j+1}$.

Pour un couple de valeurs de pression et de température mesurées, notées $(p_{mes.}, T_{mes.})$, le paramètre physique de densité à déterminer $\rho(p_{mes.}, T_{mes.})$ avec $T_j < T_{mes.} < T_{j+1}$ et $p_i < p_{mes.} < p_{i+1}$ est obtenu comme suit:

$$\rho(p_{mes.}, T_{mes.}) = \rho_i + \frac{T_{mes.} - T_j}{T_{j+1} - T_j}(\rho_j - \rho_i) \qquad (10)$$

avec :

$$\rho_i = \rho_1 + \frac{p_{mes.} - p_i}{p_{i+1} - p_i}(\rho_3 - \rho_1) \qquad (11)$$

$$\rho_j = \rho_2 + \frac{p_{mes.} - p_i}{p_{i+1} - p_i}(\rho_4 - \rho_2) \qquad (12)$$

Dans le cas de la densité massique, l'automate 4 mémorise dans la mémoire 42 ici trois tableaux:

- deux tableaux d'index, ou de données physiques, à une dimension (1 D), contenant chacun des valeurs de pression ou de température, selon un maillage souhaité ;
- un tableau de valeurs de densité massique, à deux dimensions (2D), contenant des valeurs pré-calculées densité massique en fonction des différents couples de valeurs de pression et de température.

Lors de l'étape E1 d'estimation de la puissance $\dot{q}_{charge}(t_k)$, à un instant de mesure $t_k$, le module d'estimation 41 de l'automate 4 parcourt chacun des tableaux d'index 1 D pour obtenir les deux valeurs, inférieure et supérieure, de pression (ou de température) qui encadrent la valeur de pression (ou de température) mesurée à l'instant $t_k$, lors d'une sous-étape E10. Puis, il extrait du tableau 2D de densité, les quatre valeurs pré-déterminées de densité respectivement associées aux quatre couples possibles de valeurs obtenues de pression et de température.

Lors d'une étape E11, le module d'estimation 41 réalise ensuite une interpolation linéaire à partir des valeurs de pression, de température et de densité massique obtenues à la sous-étape E10, à l'aide des équations (10), (11) et (12), afin d'estimer la densité massique $\rho(t_k)$ à l'instant de mesure $t_k$.

Des sous-étapes analogues E10 et E11 sont réalisées parallèlement pour estimer, à chaque instant de mesure $t_k$, chacun des paramètres physiques à déterminer de l'équation (6), comportant l'énergie interne $u$ de la boucle, la densité massique p du fluide caloporteur (hélium), les enthalpies massiques $h_2$ et $h_3$ du flux de charge entrant par la vanne V2 et du flux de décharge sortant par la vanne V3, et les enthalpies aux bornes (entrée et sortie) des échangeurs HX1, HX2 et du circulateur CP, notées $h_{1entrée}$, $h_{1sortie}$, $h_{2entrée}$, $h_{2sortie}$, $h_{CPentrée}$ $h_{CPsortie}$.

Lors d'une étape suivante E12, pour l'instant de mesure $t_k$ considéré, le module d'estimation 41 calcule les différentes composantes de l'équation (6), à partir :

- des paramètres physiques d'énergie interne, d'enthalpies et de densité massique, déterminés aux étapes E10 et E11 ;
- du volume V de la boucle de circulation 30 (fixe) ;
- de mesures de débit massique de la boucle $\dot{m}_{boucle}$ et de débits massiques de charge $\dot{m}_2$ et de décharge $\dot{m}_3$.

Ainsi, pour estimer la puissance thermique $\dot{q}_{charge}(t_k)$ transmise par la source à la boucle 30 à l'instant de mesure $t_k$, on évalue à partir des grandeurs physiques mesurées de pressions, températures et débits massiques :

- la densité massique du fluide caloporteur dans la boucle à l'instant $t_k$, noté $\rho(t_k)$;
- l'énergie interne de la boucle de circulation à l'instant de mesure $t_k$, noté $u(t_k)$ ;
- la variation d'énergie interne de la boucle de circulation entre les instants de mesure $t_k$ et $t_{k-1}$, soit

$$\frac{du}{dt} = \frac{u(p_{tk},\rho_{tk}) - u(p_{tk-1},\rho_{tk-1})}{dt};$$

- la variation de densité massique du fluide dans la boucle entre les instants de mesure $t_k$ et $t_{k-1}$ soit

$$\frac{d\rho}{dt} = \frac{\rho(t_k) - \rho(t_{k-1})}{dt};$$

- le flux entrant d'enthalpie lié à une charge de fluide par la vanne V2 à l'instant $t_k$, auquel on soustrait le flux entrant à l'instant initial $t_0$, soit $\dot{m}_2 h_2(t_k) - \dot{m}_2 h_2(t_0)$,
- le flux sortant d'enthalpie lié à une décharge de fluide par la vanne V3 à l'instant $t_k$, réduit du flux sortant à l'instant initial $t_0$, soit $\dot{m}_3 h_3(t_k) - \dot{m}_3 h_3(t_0)$,
- la variation d'enthalpie aux bornes de l'échangeur HX2 à l'instant $t_k$, réduite de la variation d'enthalpie aux bornes de l'échangeur HX2 à l'instant initial $t_0$, soit

$$\dot{m}_{boucle}(h_{2entrée}(t_k) - h_{2sortie}(t_k)) - \dot{m}_{boucle}(h_{2entrée}(t_0) - h_{2sortie}(t_0))$$

- la variation d'enthalpie aux bornes de l'échangeur HX1 à l'instant $t_k$, réduite de la variation d'enthalpie aux bornes de l'échangeur HX1 à l'instant initial $t_0$, soit

$$\dot{m}_{boucle}(h_{1entrée}(t_k) - h_{1sortie}(t_k)) - \dot{m}_{boucle}(h_{1entrée}(t_0) - h_{1sortie}(t_0))$$

- la variation d'enthalpie aux bornes du circulateur CP à l'instant $t_k$, réduite de la variation d'enthalpie aux bornes du circulateur CP à l'instant initial $t_0$, soit

$$\dot{m}_{boucle}(h_{CP_{entrée}}(t_k) - h_{CP_{sortie}}(t_k)) - \dot{m}_{boucle}(h_{CP_{entrée}}(t_0) - h_{CP_{sortie}}(t_0))$$

Lors d'une étape E13, le module d'estimation 41 calcule le résultat de l'équation (6), autrement dit la $\dot{q}_{charge}(t_k)$ à l'instant de mesure $t_k$, à partir des composantes déterminées à l'étape E12.

Les étapes E10 à E13 sont réitérées à une succession d'instants de mesure $t_k$ avec k=0, 1,2...

L'étape d'estimation E1 est suivie d'une étape E2 de détermination d'une valeur moyenne de la puissance thermique extraite de la source thermique à un instant courant $t_k$ du cycle de fonctionnement, notée $\overline{\dot{q}_{charge}(t_k)}$, mise en oeuvre par le module d'estimation 41. Celui-ci calcule l'intégrale temporelle de la puissance $\dot{q}_{charge}(t_k)$ entre l'instant $t_0$ de début de cycle et l'instant courant $t_k$ et la divise par la durée prédéfinie T0 du cycle de fonctionnement, selon l'équation suivante :

$$\overline{\dot{q}_{charge}(t_k)} = \frac{1}{T_0} \int_{t_0}^{t_k} \dot{q}_{charge}(t)dt \tag{13}$$

L'étape E2 est également réitérée à chaque instant de mesure $t_k$. Une succession de valeurs moyennes de la puissance thermique $\overline{\dot{q}_{charge}(t_k)}$ sont ainsi calculées au fur et à mesure du cycle de fonctionnement, pour les instants de mesure $t_k$ successifs, sans attendre la fin du cycle.

Lors d'une étape suivante E3, l'automate calcule, pour chaque instant de mesure $t_k$, des débits moyens d'amenée et d'évacuation de fluide cryogénique, notés $\dot{m}_{1moy}(t_k)$ pour le débit entrant à travers la vanne V1 et $\dot{m}_{4moy}(t_k)$ pour le débit sortant à travers la vanne V4, en fonction de la puissance moyenne $\dot{q}_{charge}(t_k)$ déterminée à l'étape E1 pour l'instant $t_k$ considéré. L'étape E3 est réalisée à chaque instant de mesure $t_k$ de sorte que les débits moyens entrant $\dot{m}_{1moy}(t_k)$ et sortant $\dot{m}_4(t_k)$ sont déterminés de façon dynamique au fur et à mesure du cycle de fonctionnement. Ces débits moyens calculés $\dot{m}_{1moy}(t_k)$ et $\dot{m}_{4moy}(t_k)$ sont destinés à être utilisés comme consignes pour réguler les vannes V1 et V4.

Pour que le bain 20 soit à l'équilibre, il est nécessaire que les débits entrant $\dot{m}_1$ et sortant $\dot{m}_4$ à travers les vannes V1 et V4 soient identiques. Un lissage de charge optimum doit fixer une valeur de débit entrant et une valeur de débit sortant, dépendant de la puissance moyenne déterminée $\overline{\dot{q}_{charge}(t_k)}$ et égales entre elles.

Sur la figure 5, on a représenté l'évolution du débit d'évacuation (ou sortant) de fluide cryogénique à l'état de vapeur du bain 20, à travers la vanne V4, dans trois cas :

- dans un premier cas, sans régulation du débit sortant à travers la vanne V4 (courbe $\dot{m}_{4\_0}$) ;
- dans un deuxième cas, avec une première consigne intermédiaire $cons_1$ de débit sortant à travers la vanne V4, non optimale, fixée à 23g/s (courbe $\dot{m}_{4\_1}$).
- dans un troisième cas, avec une deuxième consigne optimale $cons_2$ de débit sortant à travers la vanne V4 fixée à 19.5g/s, calculée en fonction de la puissance moyenne $\overline{\dot{q}_{charge}}$ transmise à la boucle par la source thermique (courbe $\dot{m}_{4\_2}$) ;

On rappelle ici que le débit d'évacuation $\dot{m}_4$ à travers la vanne V4 est régulé seulement par une consigne de limitation de débit. Il n'est pas possible d'imposer une valeur de débit d'évacuation supérieure à un seuil dépendant de la quantité de fluide cryogénique à l'état de vapeur présente dans le séparateur. S'il n'y a pas suffisamment de fluide cryogénique à l'état de vapeur dans le séparateur 2, le débit d'évacuation, ou sortant, chute.

Dans le premier cas (sans régulation), on observe de fortes variations du débit sortant globalement durant le pic de puissance thermique, puis une chute du débit sortant. Dans ce cas, le débit sortant est fortement instable.

Dans le deuxième cas (régulation intermédiaire), on observe une stabilisation du débit sortant durant une période s'étendant au-delà du pic de puissante, suivie cependant d'une chute du débit sortant.

Dans le troisième cas (régulation en fonction de la puissance moyenne transmise), on observe un débit sortant stable sur quasiment toute la durée du cycle de fonctionnement, ce qui est optimal.

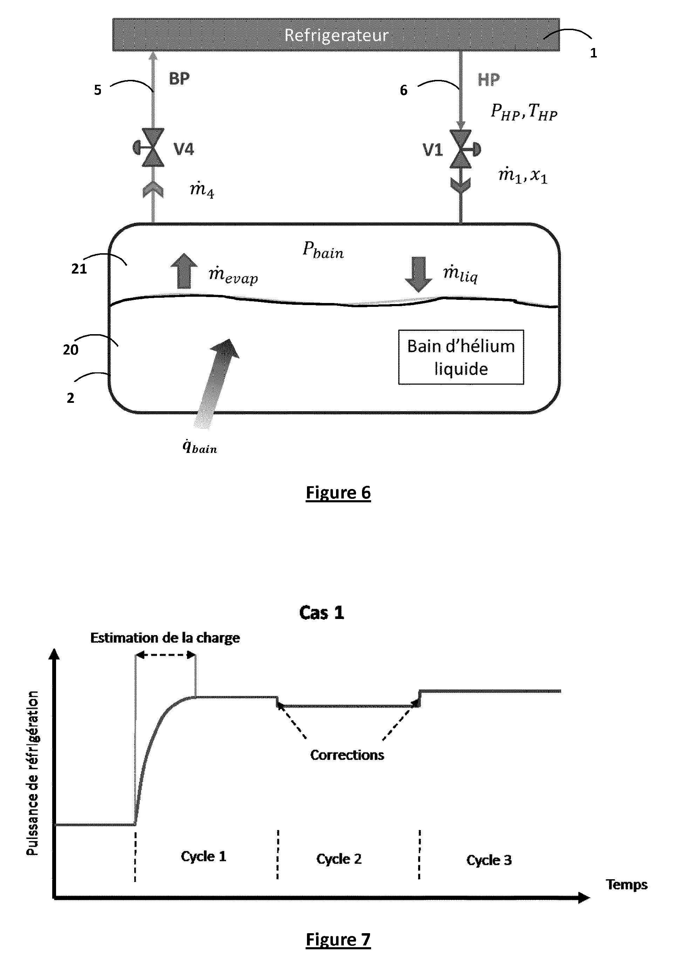

Sur la figure 6, on a représenté un schéma simplifié de circulation du fluide cryogénique entre le séparateur 2 et le refroidisseur 1. En référence à cette figure 6, pour que le niveau de liquide du bain 20 soit à l'équilibre, c'est-à-dire stable sur plusieurs cycles de fonctionnement, il est nécessaire que le débit massique d'évaporation, noté $\dot{m}_{evap}$, soit égal au débit massique de fluide cryogénique sous forme liquide fourni par la vanne V1, noté $\dot{m}_{liq}$, autrement dit :

$$\dot{m}_{evap} = \dot{m}_{liq} \qquad (14)$$

La quantité de fluide cryogénique (ici hélium) évaporé dépend de la puissance thermique reçue par le bain 20, comportant les puissances thermiques reçues à travers les échangeurs HX1 et HX2, notées $\dot{q}_{HX1}, q_{HX2}$, mais également des pertes du bain 20, notées $\dot{q}_{perte}$ et, le cas échéant, d'un chauffage supplémentaire du bain, noté $\dot{q}_{annexe}$. Autrement dit, à un instant $t_k$, le débit massique d'évaporation $\dot{m}_{evap}$ est égal à la puissance thermique reçue par le bain divisée par la chaleur latente de vaporisation du fluide cryogénique (hélium) $L_{sat}$, qui est fonction de la pression du bain :

$$\dot{m}_{evap} = \frac{\dot{q}_{bain}}{L_{sat}} \qquad (15)$$

avec :

$$\dot{q}_{bain} = \dot{q}_{HX1} + \dot{q}_{HX2} + \dot{q}_{perte} + \dot{q}_{annexe} \qquad (16)$$

$$L_{sat} = f_1(p_{bain}). \qquad (17)$$

La fonction $f_1$ est connue et mémorisée par l'automate 4 dans sa mémoire 42.

L'automate 4 mémorise également une table contenant les valeurs du paramètre $L_{sat}$ pour un ensemble de valeurs de pression d'hélium $p_{bain}$.

Le flux en sortie de la vanne V1, entrant dans le séparateur 2, contient du fluide cryogénique principalement à l'état liquide, et partiellement à l'état de vapeur (à hauteur de $x$%). La proportion x de fluide à l'état de vapeur est fonction de la température $T_{HP}$ et de la pression $p_{HP}$ en amont de la vanne V1 (le terme « amont » faisant référence au sens de circulation du fluide cryogénique) et de la pression $p_{bain}$ du fluide cryogénique dans le séparateur 2. Pour déterminer de façon précise le débit massique $\dot{m}_1$ à travers la vanne V1 permettant d'équilibrer le niveau du bain 20, il convient de tenir compte de cette proportion de fluide cryogénique à l'état de vapeur entrant par l'équation suivante :

$$\dot{m}_1 = \frac{\dot{m}_{liq}}{(1-x)} \qquad (18)$$

avec :

$$x = f_2(T_{HP}, p_{HP}, p_{bain}) \qquad (19)$$

La fonction $f_2$ est connue et mémorisée par l'automate 4 dans sa mémoire 42.

Connaissant d'une part la puissance moyenne de la charge $\overline{\dot{q}_{charge}(t_k)}$ calculée à l'étape E1, et, d'autre part les pertes de la boucle (supposées ici constantes), la puissance moyenne du circulateur CP (prédéterminée ou connue) ainsi que les pertes du bain (prédéterminées ou connues), l'automate 4 calcule pour chaque instant de mesure $t_k$ le débit théorique moyen entrant $\dot{m}_{1moy}$ et sortant $\dot{m}_{4moy}$ du séparateur 2 à l'aide de l'équation suivante :

$$\dot{m}_{1moy}(t_k) = \dot{m}_{4moy}(t_k) = \frac{\overline{\dot{q}_{charge}(t_k)} + \overline{\dot{q}_{cp}} + \overline{\dot{q}_{annexe}} + \dot{q}_{pertes}}{L_{sat}(1-x)} \qquad (20)$$

Ainsi lors de l'étape E3, le module d'estimation 41 calcule les débits moyens entrant $\dot{m}_{1moy}$ et sortant $\dot{m}_{4moy}$, correspondant aux débits de régulation (c'est-à-dire de consigne) des vannes V1 et V4, à l'aide de l'équation (20). Ces débits sont calculés de façon dynamique, pour chaque instant de mesure $t_k$, au fur et à mesure du cycle de fonctionnement. Le module d'estimation 41 transmet les débits moyens entrant $\dot{m}_{1moy}(t_k)$ et sortant $\dot{m}_{4moy}(t_k)$ calculés au module de commande 43.

Lors d'une étape E4, les débits moyens entrant $\dot{m}_{1moy}(t_k)$ et sortant $\dot{m}_{4moy}(t_k)$ déterminés sont appliqués aux vannes V1 et V4, sur commande du module 43. Ainsi, les débits fluidiques entrant et sortant du séparateur 2 sont régulés, de façon dynamique, à partir des estimations de la puissance thermique transmise par la source thermique à la boucle 30, réalisées avant que la puissance thermique estimée ne soit cédée au bain cryogénique 20.

Grâce à l'invention, on obtient une régulation optimale des débits fluidiques entrant et sortant du séparateur dès la fin du pic de puissance thermique transmise par la source à la boucle, ou peu après la fin de ce pic, sans qu'il soit nécessaire d'attendre la fin du cycle.

Dans un premier mode de réalisation, l'étape E2 est mise en oeuvre lors de chaque cycle de fonctionnement.

Dans un deuxième mode de réalisation particulier, les débits de régulation (ou de consigne) des vannes V1 et V4 sont calculés comme décrit ci-dessus, à l'aide de l'équation (20), lors d'un cycle de fonctionnement choisi comme initial. Notons $C_0$ ce cycle initial. Lors des cycles de fonctionnement ultérieurs (c'est-à-dire postérieurs au cycle initial), l'automate 4 corrige dynamiquement les débits de régulation (ou de consigne) des vannes V1 et V4. Notons $C_i$ chaque cycle de fonctionnement d'indice i avec i > 1. Lors d'un cycle ultérieur $C_i$, la correction des débits de consigne des vannes V1 et V4 est déterminée en fonction de la différence entre les puissances thermiques extraites de la source thermique par le circuit de refroidissement respectivement lors du cycle ultérieur $C_i$ et lors du cycle de fonctionnement précédent $C_{i-1}$, en réalisant une moyenne glissante. Ainsi, les débits moyens à appliquer comme débits de consigne des vannes V1 et V4 lors du cycle $C_i$ sont déterminés à l'aide de l'équation suivante :

$$\dot{m}_{1moy\_i}(t_k) = \dot{m}_{4moy\_i}(t_k) =$$

$$\frac{\frac{1}{T_0}\int_{t_0}^{t_k}[\dot{q}_{charge}(t)-q_{charge}(t-T0)]dt+\overline{\dot{q}_{charge_{i-1}}(T_0)}+\overline{\dot{q}_{cp}}+\overline{\dot{q}_{annexe}}+\dot{q}_{pertes}}{L_{sat}(1-x)} \tag{21}$$

où

- $\frac{1}{T_0}\int_{t_0}^{t_k}[\dot{q}_{charge}(t)-q_{charge}(t-T0)]dt$ représente la moyenne glissante, qui est

  o nulle si les puissances thermiques moyennes extraites aux mêmes instants d'un cycle à l'autre (et lors des cycles $C_i$ et $C_{i-1}$) sont identiques et
  o non nulle dans le cas contraire, ce qui permet de corriger la consigne ;

- $\overline{\dot{q}_{charge_{i-1}}(T_0)}$ représente la puissance thermique moyenne extraite de la source durant toute la durée du cycle précédent $C_{i-1}$.

Notons que l'amplitude de la charge thermique extraite de la source thermique par le circuit de refroidissement 3 peut :

- soit être constante ou quasi constante au fil des cycles (cas A) ;
- soit varier de façon non négligeable au fil des cycles, la variation entre deux cycles pouvant être supérieure à 10% par exemple (cas B).

Dans le cas A, le procédé de régulation décrit présente surtout un intérêt pour le cycle de fonctionnement initial, pour lequel la charge est inconnue. Il est possible d'utiliser pour les cycles suivants de simples corrections permettant d'atteindre un optimal de régulation sur plusieurs cycles en partant de la valeur initiale estimée et selon la méthode décrite dans le brevet FR1161483. Au cours du cycle initial, la puissance de réfrigération, qui dépend directement des débits de régulation des vannes V1 et V4 déterminés, est dynamiquement modifiée en fonction de l'estimation de puissance moyenne réalisée. Au cours des cycles suivants, la puissance de réfrigération peut être modifiée uniquement de façon ponctuelle au début de chaque cycle, comme représenté sur la figure 7. En cas de variation brutale de la charge causée par un événement imprévu, l'estimateur joue le rôle de sécurité. Il permet de mettre en place une réaction adéquate du système de régulation connaissant la charge à extraire.

Dans le cas B, l'estimation de charge est mise en oeuvre à chaque cycle de fonctionnement. La figure 8 représente les variations de la puissance de réfrigération sur plusieurs cycles.

Grâce à l'invention, la régulation des débits à travers les vannes V1 et V4 peut être réalisée de façon efficace dès le premier cycle de fonctionnement, mais également pour une source thermique ayant des cycles de fonctionnement différents.

## Revendications

1. Procédé de régulation d'un système de refroidissement cryogénique d'une source thermique, ledit système comportant

   • un séparateur cryogénique (2) comportant un bain (20) de fluide cryogénique à l'état liquide et relié à un refroidisseur cryogénique (1) par un conduit (4) d'amenée et par un conduit (5) d'évacuation de fluide cryogénique;
   • un circuit de refroidissement (3) de la source thermique, comportant une boucle (30) de circulation d'un fluide caloporteur destinée à recevoir une puissance thermique transmise par la source thermique et pour transférer la puissance thermique transmise au bain cryogénique (20);

   dans lequel les débits fluidiques ($\dot{m}_1, \dot{m}_4$) entrant et sortant du séparateur (2) sont régulés à partir d'une estimation (E1) de la puissance thermique ($\dot{q}_{charge}(t_k)$) transmise par la source, réalisée avant que ladite puissance thermique ne soit transférée au bain cryogénique (20).

2. Procédé selon la revendication 1, **caractérisé en ce qu'**il comprend une étape (E0) de mesure d'au moins une grandeur physique relative au fluide caloporteur circulant dans la boucle (30), la puissance thermique transmise par la source étant estimée à partir de mesures relatives à ladite grandeur physique.

3. Procédé selon la revendication 1 ou 2, **caractérisé en ce que**, la source thermique ayant un fonctionnement cyclique, il comprend, durant un cycle de fonctionnement d'une durée prédéfinie (TO), une étape (E2) de calcul d'au moins une valeur moyenne ($\overline{\dot{q}_{charge}(t_k)}$) de puissance thermique transmise sur la durée du cycle de fonctionnement (TO), à partir de valeurs estimées ($\dot{q}_{charge}(t_k)$) de la puissance thermique transmise à une succession d'instants, mise en oeuvre avant la fin du cycle de fonctionnement, les débits entrant et sortant ($\dot{m}_1, \dot{m}_4$) étant régulés en fonction de ladite valeur moyenne ($\overline{\dot{q}_{charge}(t_k)}$) de puissance thermique transmise sur le cycle.

4. Procédé selon la revendication 3, **caractérisé en ce que** une succession de valeurs moyennes ($\overline{\dot{q}_{charge}(t_k)}$) de puissance thermique transmise sont calculées au fur et à mesure du cycle de fonctionnement, les débits entrant et sortant ($\dot{m}_1, \dot{m}_4$) étant régulés (E4) de façon dynamique en fonction des valeurs moyennes successives de puissance thermique transmise.

5. Procédé selon l'une des revendications précédentes, **caractérisé en ce que**, pour estimer la puissance thermique transmise ($\dot{q}_{charge}(t_k)$), on détermine une variation d'énergie interne $\left(\dfrac{du}{dt}\right)$ de la boucle de circulation (30).

6. Procédé selon la revendication 5, **caractérisé en ce que**, dans le cas d'une configuration fermée de la boucle de circulation (30), on détermine la variation d'énergie interne $\left(\dfrac{du}{dt}\right)$ dans la boucle (30) à partir de mesures de la pression du fluide caloporteur dans la boucle (30).

7. Procédé selon l'une des revendications précédentes, **caractérisé en ce que**, le circuit de refroidissement (3) comportant au moins un échangeur thermique (HX1, HX2) immergé dans le bain (20) de fluide cryogénique à l'état liquide, l'estimation de la puissance thermique transmise ($\dot{q}_{charge}(t)$) comprend une évaluation de la puissance thermique transférée dans le bain par l'intermédiaire de l'échangeur (HX1, HX2).

8. Procédé selon l'une des revendications précédentes, **caractérisé en ce que**, le circuit de refroidissement (3) comportant un circulateur (CP) pour faire circuler le fluide caloporteur dans la boucle (30), l'estimation de la puissance

thermique transmise ($\overline{q_{charge}}$) comprend une évaluation de la puissance apportée par le circulateur (CP) dans la boucle (30).

9. Procédé selon l'une des revendications précédentes, **caractérisé en ce qu'**on détermine l'un au moins des paramètres physiques relatifs au fluide caloporteur dans la boucle (30) du groupe comportant une énergie interne, une enthalpie et une densité massique par interpolation linéaire à partir de mesures d'au moins une grandeur physique relative au fluide caloporteur et à l'aide de données thermodynamiques relatives au fluide caloporteur.

10. Procédé selon l'une des revendications 2 à 9, **caractérisé en ce que** l'étape de mesure (E0) comprend des mesures de températures, de pressions et de débits massiques.

11. Procédé selon l'une des revendications 2 à 10, **caractérisé en ce que**, lors de l'étape de mesure (E0), on mesure au moins l'une des grandeurs physiques du groupe comportant

  • les températures en entrée et en sortie d'au moins un échangeur thermique (HX1, HX2) immergé dans le bain de fluide cryogénique (20) du séparateur (2) ;
  • les températures en entrée et en sortie d'un circulateur (CP) de la boucle de circulation (30) ;
  • les pressions en entrée et en sortie d'un circulateur (CP) de la boucle de circulation (30) ;
  • le débit massique de fluide caloporteur en une position le long de la boucle de circulation (30) ;
  • le débit massique entrant, la température et la pression du fluide caloporteur délivré par une vanne de charge dans la boucle ;
  • le débit massique sortant, la température et la pression du fluide caloporteur retiré de la boucle par une vanne de décharge.

12. Dispositif de régulation pour un système de refroidissement cryogénique d'une source thermique, ledit système comportant

  • un séparateur cryogénique (2) comportant un bain (20) de fluide cryogénique à l'état liquide et relié à un refroidisseur cryogénique (1) par un conduit (6) d'amenée de fluide cryogénique au moins partiellement à l'état liquide et par un conduit (5) d'évacuation de fluide cryogénique à l'état de vapeur;
  • un circuit (3) de refroidissement de la source thermique, comportant une boucle (30) de circulation d'un fluide caloporteur destinée à recevoir la puissance thermique transmise par la source thermique et pour transférer la puissance thermique transmise au bain cryogénique (20);

**caractérisé en ce qu'**il comprend des éléments matériels et logiciels pour mettre en oeuvre les étapes du procédé selon l'une des revendications 1 à 11.

13. Dispositif selon la revendication 12, **caractérisé en ce qu'**il comprend un module (41) d'estimation de la puissance thermique transmise et un module (43) de régulation des débits entrant et sortant de fluide cryogénique dans le bain à partir de la puissance thermique transmise estimée, ledit module d'estimation (41) étant adapté pour réaliser une estimation de la puissance thermique transmise avant que ladite puissance thermique ne soit transférée au bain cryogénique (20).

14. Dispositif selon l'une des revendications 12 et 13, **caractérisé en ce qu'**il comprend une mémoire (42) de stockage de données thermodynamiques relatives au fluide caloporteur.

15. Système de refroidissement cryogénique d'une source thermique comportant

  • un séparateur cryogénique (2) comportant un bain (20) de fluide cryogénique à l'état liquide et relié à un refroidisseur cryogénique (1) par un conduit (6) d'amenée de fluide cryogénique au moins partiellement à l'état liquide et par un conduit (5) d'évacuation de fluide cryogénique à l'état de vapeur;
  • un circuit (3) de refroidissement de la source thermique, comportant une boucle (30) de circulation d'un fluide caloporteur destinée à recevoir la puissance thermique transmise par la source thermique et pour transférer la puissance thermique transmise au bain cryogénique (20);
  • un dispositif de régulation selon l'une des revendications 12 à 14.

**Figure 1**

16

**Figure 2**

**Figure 3**

**Figure 4**

**Figure 5**

**Figure 6**

**Cas 1**

**Figure 7**

## Cas 2

**Figure 8**

**Figure 9**

E0 — mes.

E1 — $\dot{q}_{charge}(t_k)$

E2 — $\overline{\dot{q}_{charge}(t_k)} = \dfrac{1}{T_0} \displaystyle\int_{t_0}^{t_k} \dot{q}_{charge}(t)\,dt$

E3 — $\dot{m}_{1moy}(t_k)\,,\ \dot{m}_{4moy}(t_k)$

E4 — regul.

**Figure 10A**

E10

E11

E12

E13 — $\dot{q}_{charge}(t_k)$

**Figure 10B**

**Figure 11**

**Europäisches Patentamt**
**European Patent Office**
**Office européen des brevets**

**RAPPORT DE RECHERCHE EUROPEENNE**

Numéro de la demande

EP 14 19 4653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/000332 A1 (AIGOUY GERALD [FR] ET AL) 3 janvier 2013 (2013-01-03) * le document en entier * ----- | 1-4,9-15 | INV. F25B9/00 F25B9/12 F25B25/00 F25B49/02 |
| A | CLAUDET G ET AL: "Design of the ITER-FEAT cryoplant to achieve stable operation over a wide range of experimental parameters and operation scenarios", FUSION ENGINEERING AND DESIGN, ELSEVIER SCIENCE PUBLISHERS, AMSTERDAM, NL, vol. 58-59, 1 novembre 2001 (2001-11-01), pages 205-209, XP027381267, ISSN: 0920-3796 [extrait le 2001-11-01] * le document en entier * ----- | 1-15 | |
| A | BRIEND P ET AL: "DYNAMIC SIMULATION OF A LARGE SCALE PULSED LOAD HELIUM REFRIGERATOR", ADVANCES IN CRYOGENIC ENGINEERING: TRANSACTIONS OF THE CRYOGENIC ENGINEERING CONFERENCE - CEC, AMERICAN INSTITUTE OF PHYSICS, US, vol. 55, 9 avril 2010 (2010-04-09), pages 1453-1459, XP007915623, ISBN: 978-0-7354-0761-9 [extrait le 2010-11-04] * le document en entier * ----- | 1-15 | **DOMAINES TECHNIQUES RECHERCHES (IPC)** F25B |
| A | FR 2 983 947 A1 (COMMISSARIAT ENERGIE ATOMIQUE [FR]) 14 juin 2013 (2013-06-14) * le document en entier * ----- | 1-15 | |

Le présent rapport a été établi pour toutes les revendications

| Lieu de la recherche | Date d'achèvement de la recherche | Examinateur |
|---|---|---|
| Munich | 16 avril 2015 | Lucic, Anita |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 14 19 4653

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2015

| Document brevet cité au rapport de recherche | Date de publication | Membre(s) de la famille de brevet(s) | Date de publication |
|---|---|---|---|
| US 2013000332 A1 | 03-01-2013 | CN 102812310 A | 05-12-2012 |
| | | EP 2545330 A1 | 16-01-2013 |
| | | FR 2957406 A1 | 16-09-2011 |
| | | JP 2013522571 A | 13-06-2013 |
| | | KR 20130018688 A | 25-02-2013 |
| | | US 2013000332 A1 | 03-01-2013 |
| | | WO 2011110768 A1 | 15-09-2011 |
| FR 2983947 A1 | 14-06-2013 | EP 2791595 A1 | 22-10-2014 |
| | | FR 2983947 A1 | 14-06-2013 |
| | | WO 2013088303 A1 | 20-06-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2963090
- FR 1161483